(19) Europäisches Patentamt
European Patent Office
Office européen des brevets

(11) **EP 3 168 648 B1**

(12) **FASCICULE DE BREVET EUROPEEN**

(45) Date de publication et mention de la délivrance du brevet:
**31.08.2022 Bulletin 2022/35**

(21) Numéro de dépôt: **16198251.7**

(22) Date de dépôt: **10.11.2016**

(51) Classification Internationale des Brevets (IPC):
*G01S 19/21* (2010.01)     *G01S 19/30* (2010.01)

(52) Classification Coopérative des Brevets (CPC):
**G01S 19/21; G01S 19/30**

(54) **PROCEDE DE DETECTION D'UNE FAUSSE SYNCHRONISATION D'UN RECEPTEUR AVEC UN SATELLITE, MODULE ET PRODUIT PROGRAMME D'ORDINATEUR ASSOCIES**

VERFAHREN ZUR DETEKTION EINER FALSCHEN SYNCHRONISIERUNG EINES EMPFÄNGERS MIT EINEM SATELLITEN, ENTSPRECHENDES MODUL UND ENTSPRECHENDES COMPUTERPROGRAMMPRODUKT

METHOD FOR DETERMINING A WRONG SYNCHRONIZATION OF A RECEIVER WITH A SATELLITE, ASSOCIATED MODULE AND COMPUTER PROGRAM PRODUCT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.11.2015 FR 1502381**

(43) Date de publication de la demande:
**17.05.2017 Bulletin 2017/20**

(73) Titulaire: **Thales**
**92400 Courbevoie (FR)**

(72) Inventeurs:
• **MARTIN, Nicolas**
**26000 Valence (FR)**
• **CLAUZEL, Yves**
**26000 Valence (FR)**

(74) Mandataire: **Lavoix**
**2, place d'Estienne d'Orves**
**75441 Paris Cedex 09 (FR)**

(56) Documents cités:
**EP-A1- 2 520 949      EP-A1- 2 818 893**
**US-A1- 2011 103 432**

• **VAN DIERENDONCK A J ET AL: "Theory and Performance of Narrow Correlator Spacing in a GPS Receiver", NTM 1992 - PROCEEDINGS OF THE 1992 NATIONAL TECHNICAL MEETING OF THE INSTITUTE OF NAVIGATION, THE INSTITUTE OF NAVIGATION, 8551 RIXLEW LANE SUITE 360 MANASSAS, VA 20109, USA, 29 janvier 1992 (1992-01-29), pages 115-124, XP056005346,**

**Description**

La présente invention concerne un procédé de détection d'une fausse synchronisation d'un récepteur avec un satellite lors d'une phase d'acquisition d'un signal de navigation issu de ce satellite.

Un tel satellite fait partie d'un système global de positionnement par satellites connu également sous le sigle anglais GNSS (pour « *Global Navigation Satellite System »*).

De manière générale, un système GNSS est composé d'une pluralité de satellites permettant à un récepteur portable de déterminer sa position dans un repère terrestre, sa vitesse et l'heure.

Il existe actuellement plusieurs systèmes GNSS parmi lesquels on peut notamment citer le système GPS, le système GLONASS ou encore le système GALILEO dont la mise en service est prévue prochainement.

Les satellites d'un tel système GNSS sont aptes à émettre des signaux électromagnétiques comprenant notamment une information de navigation.

Chaque information de navigation comprend généralement des données relatives au temps d'émission par le satellite du signal correspondant et à la position courante du satellite. En particulier, les données relatives à la position courante du satellite contiennent généralement l'almanach donnant une position grossière du satellite et les éphémérides donnant la position courante exacte du satellite.

L'information de navigation est portée par une onde porteuse et modulée par un code d'étalement propre à chaque satellite. Ainsi, les signaux sont émis par les satellites en utilisant une technique d'étalement de spectre.

Le récepteur est apte à recevoir les signaux émis par les satellites et à en extraire l'information de navigation pour notamment déterminer la distance jusqu'au satellite ayant émis le signal correspondant. Cette distance, appelée également pseudo-distance, est déterminée en analysant le temps de propagation du signal correspondant.

Pour déterminer sa position, sa vitesse et l'heure, le récepteur met en œuvre un traitement numérique des informations de navigation issues d'au moins trois satellites différents.

En pratique, pour avoir une position plus précise, le récepteur a besoin d'informations de navigation issues d'au moins quatre satellites différents.

Plus précisément, pour acquérir l'information de navigation d'un satellite donné, le récepteur met en œuvre deux phases traitant les signaux issus de ce satellite.

Lors d'une phase initiale, appelée dans l'état de l'art, phase d'acquisition, le récepteur génère un signal local contenant notamment un code d'étalement local présentant l'image du code d'étalement du satellite.

Comme initialement le récepteur ne connait pas sa position, le signal local n'est pas synchronisé avec le signal reçu. Ceci signifie en particulier que le signal local est décalé en fréquence de porteuse du signal reçu d'une valeur appelée valeur de Doppler, et que le code d'étalement du signal reçu est retardé du code d'étalement local d'une valeur appelée valeur de retard.

Puis, le récepteur effectue une recherche d'un pic des corrélations entre le signal local et le signal reçu en essayant différentes valeurs de Doppler et de retard.

Lorsqu'un pic est détecté, le récepteur détermine les valeurs de Doppler et de retard correspondant à ce pic et à partir de ces valeurs, lance une phase suivante, appelée dans l'état de l'art, phase de poursuite.

Lors de la phase de poursuite, le récepteur met à jour régulièrement les valeurs de Doppler et de retard, et extrait l'information de navigation du signal émis par le satellite en utilisant notamment le code d'étalement local et les valeurs de Doppler et de retard déterminées.

À l'issue de la phase d'acquisition, il est considéré que le récepteur s'est synchronisé avec le satellite ou encore s'est « accroché » au satellite.

Ceci signifie en particulier que le récepteur a pu trouver les valeurs de Doppler et de retard relatives à ce satellite pour initier la phase de poursuite.

Il arrive parfois que le récepteur synchronise son signal local correspondant au satellite recherché sur le signal reçu d'un autre satellite, ce qui conduit à une mesure de distance erronée, et donc potentiellement à un positionnement faux.

Dans ce cas, il s'agit d'une fausse synchronisation ou d'un faux « accrochage ».

Cela se produit par exemple lorsque la corrélation entre le signal local et le signal reçu du satellite recherché donne moins d'énergie que la corrélation avec le signal reçu d'un autre satellite, à cause d'un écart de puissance reçue élevé.

Il existe dans l'état de l'art différentes méthodes permettant d'éviter une telle fausse synchronisation.

On connait par exemple une telle méthode décrite dans US 2011/103432 A1 ou dans EP 2 520 949 A1.

Une autre méthode utilisée de manière conventionnelle, consiste à vérifier la cohérence entre la position du satellite calculée à partir des éphémérides contenues dans l'information de navigation et celle calculée à partir de l'almanach, contenant les identifiants des satellites, contrairement aux éphémérides. L'incohérence entre ces valeurs signifie donc une fausse synchronisation.

Toutefois, cette méthode n'est pas complètement satisfaisante. En particulier, elle nécessite de recueillir la totalité des éphémérides contenues dans l'information de navigation ce qui est relativement long. En pratique, cela peut prendre jusqu'à deux minutes.

On conçoit alors que cela pénalise le fonctionnement du récepteur, notamment suite à un masquage du satellite, et ne permet pas d'assurer une continuité de service.

La présente invention a pour but de remédier à cet inconvénient.

À cet effet, l'invention a pour objet un procédé de détection d'une fausse synchronisation conforme à la revendication 1.

Suivant d'autres aspects avantageux de l'invention, le procédé de détection comprend une ou plusieurs des caractéristiques des revendications 2 à 9.

L'invention a également pour objet un produit programme d'ordinateur comportant des instructions logicielles qui, lorsque mises en œuvre par un équipement informatique, mettent en œuvre un procédé tel que défini ci-dessus.

L'invention a également pour objet un module de détection d'une fausse synchronisation conforme à la revendication 11.

Ces caractéristiques et avantages de l'invention apparaitront à la lecture de la description qui va suivre, donnée uniquement à titre d'exemple non limitatif, et faite en référence aux dessins annexés, sur lesquels :

- la figure 1 est une vue schématique d'un système global de positionnement par satellites et d'un récepteur, le récepteur comportant un module de détection d'une fausse synchronisation selon l'invention ;
- la figure 2 est une vue schématique d'une fonction d'autocorrélation utilisée lors du fonctionnement du système de la figure 1 ;
- la figure 3 est une vue schématique d'une fonction d'inter-corrélation utilisée lors du fonctionnement du système de la figure 1 ;
- la figure 4 est une vue détaillée du module de détection de la figure 1 ;
- la figure 5 est un organigramme d'un procédé de détection mis en œuvre par le module de détection de la figure 4 ; et
- la figure 6 est une vue schématique illustrant une étape du procédé de la figure 5.

Dans la suite de la description, l'expression « sensiblement égal à » s'entend comme une relation d'égalité à plus ou moins 10 %.

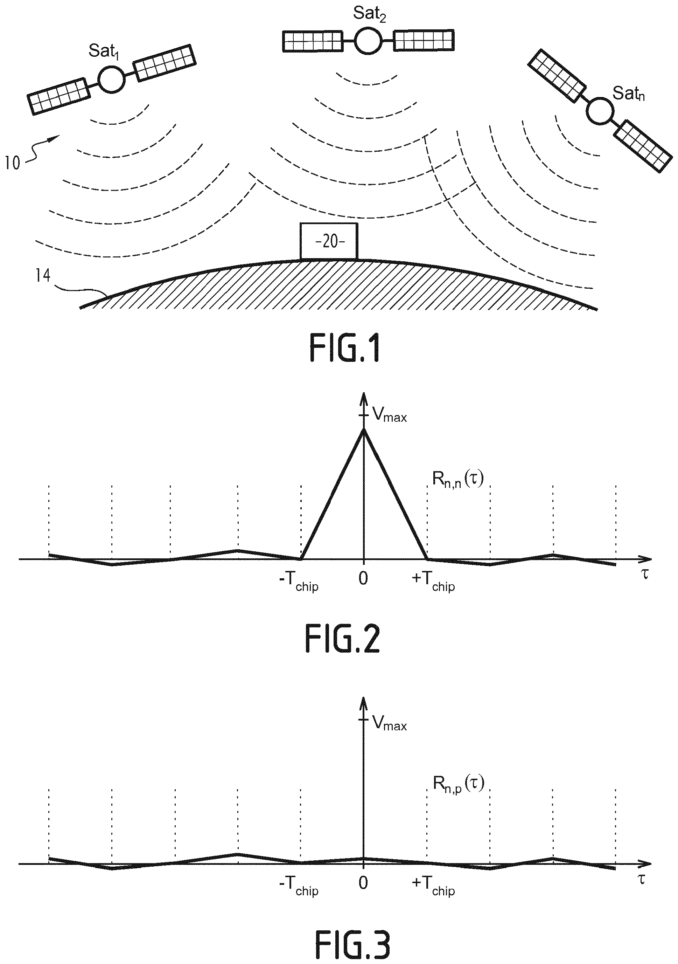

On a en effet représenté sur la figure 1, un système global 10 de positionnement par satellites du type GNSS (de l'anglais « *Global Navigation Satellite System »*).

En référence à cette figure 1, le système de positionnement 10 comporte une pluralité de satellites $Sat_n$ disposés sur des orbites différentes autour de la Terre pour laquelle le système de positionnement 10 est mis en place.

Le nombre total des satellites $Sat_n$ est par exemple égal à 30.

L'indice $n$ correspond à un identifiant de chaque satellite $Sat_n$ et varie par exemple entre 1 et 30.

Chaque satellite $Sat_n$ est apte à émettre des signaux électromagnétiques S vers une partie de la surface terrestre 14 qu'il est en train de survoler.

En particulier, les satellites $Sat_n$ sont disposés de telle sorte qu'au moins trois satellites $Sat_n$ sont aptes à émettre des signaux électromagnétiques de navigation S vers sensiblement chaque point de la surface terrestre 14.

La position courante de chaque satellite $Sat_n$ est caractérisée par les éphémérides relatives à ce satellite ou par l'almanach de celui-ci.

Comme cela est connu en soi, les éphémérides permettent de déterminer la position exacte du satellite $Sat_n$ alors que l'almanach donne une position grossière.

Chaque signal S émis par chacun des satellites $Sat_n$ comprend une information de navigation.

En particulier, un tel signal S comprend une information de navigation modulée par un code d'étalement $C_n(\phi_c)$ propre au satellite $Sat_n$ ayant émis ce signal.

L'information de navigation modulée est portée par une onde porteuse $exp(-j\phi_p)$ selon une technique connue en soi.

Chaque information de navigation comprend notamment le temps d'émission du signal correspondant, les éphémérides et l'almanach du satellite $Sat_n$ au moment de l'émission du signal S.

Chaque code d'étalement $C_n(\phi_c)$ présente un code binaire du type pseudo-aléatoire, connu également dans l'état de l'art sous le sigle anglais PRN (pour « *Pseudo Random Noise »*).

Chaque code d'étalement $C_n(\phi_c)$ est un code périodique avec une période de code dénotée $L_c$ et exprimée en un nombre entier d'unités de référence.

L'unité de référence est par exemple un chip dont la durée est dénotée $T_{chip}$ et exprimée en secondes.

On entend par « chip », une unité de référence correspondant à un créneau d'un code du type pseudo-aléatoire.

Chaque code d'étalement $C_n(\phi_c)$ est caractérisé par sa fonction d'autocorrélation $R_{n,n}$ déterminée par la formule suivante :

$$R_{n,n}(\tau) = \frac{1}{L_c} \int_0^{L_c} C_n(u)\, C_n(u+\tau)\, du.$$

Notamment, dans le point $\tau = 0$, dit point de référence, la fonction d'autocorrélation $R_{n,n}$ prend sa valeur maximale $V_{max}$. Pour $\tau \leq -T_{chip}$ et $\tau \geq T_{chip}$, la fonction d'autocorrélation $R_{n,n}$ prend des valeurs $V$ très petites devant $V_{max}$, c'est-à-dire, $V \ll V_{max}$.

Un exemple d'une telle fonction d'autocorrélation $R_{n,n}$ est illustré schématiquement sur la figure 2.

Les codes d'étalement $C_n(\phi_c)$ correspondant aux satellites $Sat_n$ différents, sont quasi-perpendiculaires. Autrement dit, la fonction d'inter-corrélation $R_{n,p}$ entre chaque couple de codes d'étalement $C_n(\phi_c)$ et $C_j(\phi_c)$ différents prend des valeurs $V$ négligeables devant $V_{max}$, la fonction d'inter-corrélation $R_{n,p}$ étant déterminée par la formule suivante :

$$R_{n,p}(\tau) = \frac{1}{L_c} \int_0^{L_c} C_n(u)\, C_p(u+\tau)\, du.$$

Un exemple d'une telle fonction d'inter-corrélation $R_{n,p}$ est illustré schématiquement sur la figure 3.

Chaque code d'étalement $C_n(\phi_c)$ permet de moduler l'information de navigation émise par le satellite $Sat_n$.

Lors de la réception des signaux émis par les satellites $Sat_n$, ces signaux sont aptes à être démodulés en utilisant les codes d'étalement $C_n(\phi_c)$ correspondants.

Selon l'exemple de réalisation décrit ci-après, le système de positionnement 10 est le système GPS (de l'anglais « *Global Positioning System* »).

Bien entendu, d'autres exemples de réalisation sont également possibles.

Selon l'exemple de réalisation décrit, les codes d'étalement $C_n(\phi_c)$ sont des codes de Gold.

Comme connu en soi, la fonction d'autocorrélation $R_{n,n}$ de chaque code de Gold comporte un pic principal correspondant à son extremum global, une pluralité de pics secondaires correspondant à ses extrema locaux autres que l'extremum global et des tronçons constants.

Ainsi, dans le pic principal, la fonction d'autocorrélation $R_{n,n}$ normalisée prend sa valeur maximale égale à 1. Dans les pics secondaires, la fonction d'autocorrélation $R_{n,n}$ prend la valeur qui est égale soit à 63/1023, soit à -65/1023. Dans les tronçons constants, la fonction d'autocorrélation $R_{n,n}$ prend la valeur égale à -1/1023.

La fonction d'inter-corrélation $R_{n,p}$ de chaque couple de codes de Gold différents comporte une pluralité de pics secondaires correspondant à ses extrema et des tronçons constants.

Ainsi, dans les pics secondaires, la fonction d'inter-corrélation $R_{n,p}$ normalisée prend la valeur qui est égale soit à 63/1023, soit à -65/1023. Dans les tronçons constants, la fonction d'inter-corrélation $R_{n,p}$ prend la valeur égale à -1/1023.

Les signaux S émis au moins par certains des satellites $Sat_n$ sont reçus par un récepteur 20.

Le récepteur 20 est par exemple un dispositif électronique portable.

Le récepteur 20 est apte par exemple à se déplacer sur la surface terrestre 14 ou à la proximité de celle-ci avec une vitesse variable.

Le récepteur 20 est apte à recevoir des signaux S issus des satellites $Sat_n$, et à extraire de ces signaux S les informations de navigation pour déduire sa position courante, sa vitesse courante et l'heure comme ceci sera expliqué par la suite.

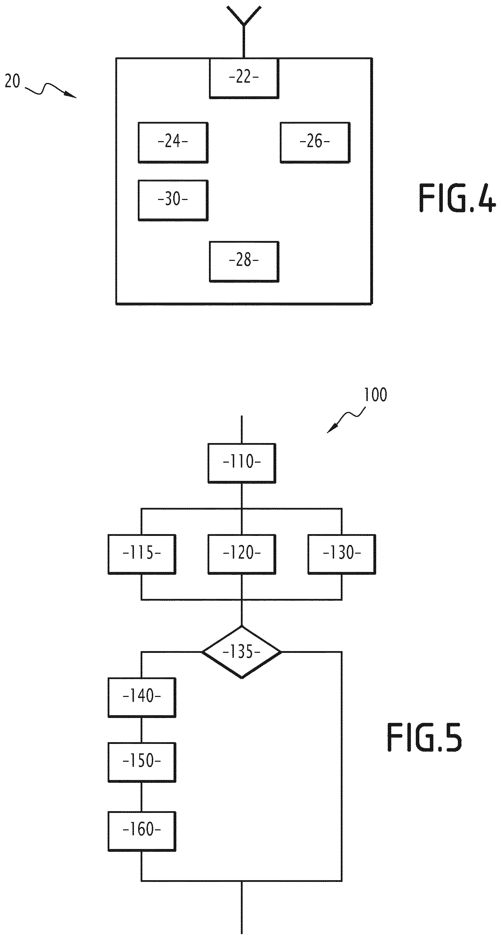

Le récepteur 20 est illustré plus en détail sur la figure 4.

Ainsi, en référence à cette figure 4, le récepteur 20 comporte une antenne 22, un module d'acquisition 24, un module de poursuite 26, un module de détection 28 selon l'invention, un module de commande 30 et des ressources matérielles.

Les modules 24, 26, 28 et 30 se présentent par exemple sous la forme des logiciels qui sont mis en œuvre par les ressources matérielles prévues à cet effet, telles qu'un processeur, une mémoire vive, une mémoire morte, etc. Les ressources matérielles sont par exemple alimentées par une batterie.

En particulier, la mémoire morte du récepteur 20 est apte à stocker des images des codes d'étalement $C_N(\phi_c)$ de chaque satellite $Sat_n$.

L'antenne 22 est apte à recevoir des signaux $S_r$ électromagnétiques correspondant aux signaux S émis par les satellites $Sat_n$ lorsque ceux-ci se trouvent dans un domaine de sa visibilité.

Le module de commande 30 est apte à piloter le fonctionnement des modules 24, 26 et 28.

Le module d'acquisition 24 est apte à mettre en œuvre une phase d'acquisition des signaux $S_r$ selon des techniques connues en soi.

Le module de poursuite 26 est apte à mettre en œuvre une phase de poursuite des signaux $S_r$ selon des techniques connues en soi.

Finalement, le module de détection 28 est apte à mettre en œuvre une phase de convergence, transitoire entre la phase d'acquisition et la phase de poursuite. La phase de convergence comprend notamment un procédé 100 de détection d'une fausse synchronisation selon l'invention. Ce procédé sera décrit en détail par la suite.

Le fonctionnement du récepteur 20 va désormais être expliqué.

À chaque démarrage du récepteur 20, le module de commande 30 initie une pluralité de voies d'acquisition pour l'ensemble des satellites $Sat_n$. Chacune de ces voies permet d'acquérir l'information de navigation issue du satellite $Sat_n$ auquel elle est associée, lorsque ce satellite $Sat_n$ est dans le domaine de visibilité de l'antenne 22.

Le fonctionnement du récepteur 20 sur chaque voie d'acquisition est sensiblement analogue. Ainsi, seul le fonctionnement du récepteur 20 sur une voie sera expliqué ci-après.

Cette voie est associée par exemple au satellite $Sat_n$, dit par la suite satellite recherché. Il est supposé en outre que le satellite $Sat_n$ et situé dans le domaine de visibilité de l'antenne 22.

Pour cette voie, le module de commande 30 génère un signal local $S_{loc}$ comportant une onde porteuse locale $exp(-j\phi_{ploc})$ et un code d'étalement local $C_n(\phi_{cloc})$ correspondant au code d'étalement $C_n(\phi_c)$ du satellite recherché.

Le signal local $S_{loc}$ en fonction du temps $t$ s'écrit alors sous la forme suivante :

$$S_{loc}(t) = \exp\left(-j\phi_{ploc}(t)\right) . C_n\big(\phi_{cloc}(t)\big),$$

avec $j^2 = -1$.

Puis, le module de commande 30 lance l'exécution de la phase d'acquisition qui est alors mise en œuvre par le module d'acquisition 24.

En particulier, lors de la phase d'acquisition, le module d'acquisition 24 détermine une valeur de Doppler et une valeur de retard du signal reçu $S_r$ par rapport au signal local $S_{loc}$.

La valeur de Doppler correspond au décalage en fréquence de l'onde porteuse locale $exp(-j\phi_{ploc})$ par rapport à l'onde porteuse $exp(-j\phi_p)$ du signal $S_r$ reçu.

La valeur de retard correspond au retard du code d'étalement $C_n(\phi_c)$ du signal reçu $S_r$ par rapport au code d'étalement local $C_n(\phi_{cloc})$.

Ces valeurs sont déterminées selon des techniques connues qui comprennent notamment le calcul de corrélations de trois types.

Un premier type de corrélations, dit ponctuel, consiste à calculer des corrélations entre le signal reçu $S_r$ et le signal local $S_{loc}$.

Un deuxième type de corrélations, dit d'avance, consiste à calculer des corrélations entre le signal reçu $S_r$ et un signal correspondant au signal local $S_{loc}$ dans lequel le code d'étalement local $C_n(\phi_{cloc} + d)$ est décalé en avance d'une valeur d comprise entre 0 et $T_{chip}$.

Un troisième type de corrélations, dit de retard, consiste à calculer des corrélations entre le signal reçu $S_r$ et un signal correspondant au signal local $S_{loc}$ dans lequel le code d'étalement local $C_n(\phi_{cloc} - d)$ est décalé en retard de la même valeur d.

À l'issue de la phase d'acquisition, le récepteur 20 synchronise le signal local $S_{loc}$ avec le signal S émis par le satellite $Sat_n$ recherché en utilisant les valeurs de Doppler et de retard déterminées.

Puis, le module de commande 30 lance l'exécution de la phase de convergence et notamment du procédé de détection 100 d'une fausse synchronisation. Ce procédé est mis en œuvre par le module de détection 28.

La phase de convergence réalise un asservissement de la valeur de retard du code d'étalement local $C_n(\phi_{cloc})$ et de la valeur de Doppler de l'onde porteuse locale $exp(-j\phi_{cloc})$, sur le signal reçu $S_r$, grâce à des boucles de poursuite de code et de porteuse, grâce notamment aux trois types de corrélation précités.

Cette phase transitoire permet de faire coïncider précisément le code d'étalement local $C_n(\phi_{cloc})$ et l'onde porteuse locale $exp(-j\phi_{cloc})$ avec le code d'étalement $C_n(\phi_c)$ et l'onde porteuse $exp(-j\phi_p)$ du signal satellite reçu $S_r$.

En outre, le procédé de détection 100 mis en œuvre pendant cette phase permet de détecter une fausse synchronisation de la voie d'acquisition correspondante avec un satellite $Sat_p$ autre que le satellite recherché $Sat_n$.

En particulier, le procédé de détection 100 permet de détecter éventuellement une fausse synchronisation à valeur de Doppler non-nulle en déterminant l'incohérence entre la fréquence du code d'étalement local $C_n(\phi_{cloc})$ et la fréquence de la porteuse locale $exp(-j\phi_{ploc})$.

Si une telle fausse synchronisation n'est pas détectée, le procédé de détection 100 permet de détecter une fausse synchronisation à valeur de Doppler nulle en positionnant un corrélateur ponctuel sur le sommet du pic principal de la fonction d'autocorrélation $R_{n,n}$ dans le cas d'une synchronisation sur le satellite $Sat_n$ recherché, et sur le sommet d'un pic secondaire de la fonction d'inter-corrélation $R_{n,p}$ dans le cas contraire.

Notamment, lors d'une fausse synchronisation, les valeurs de Doppler et de retard déterminées par le module d'acquisition 24, correspondent au signal S émis par un satellite $Sat_p$ autre que le satellite $Sat_n$ recherché.

On conçoit alors que dans ce cas, les signaux $S_{loc}$ et S ne peuvent pas être synchronisés correctement. Il s'agit donc d'une fausse synchronisation et d'un faux accrochage.

Lorsque le module de détection 28 détecte une fausse synchronisation, le module de commande 30 lance à nouveau la phase d'acquisition.

Lorsque le module de détection 28 ne détecte pas de fausse synchronisation, le module de commande 30 lance la phase de poursuite qui est alors mise en œuvre par le module de poursuite 26.

En particulier, lors de la phase de poursuite, le module de poursuite 26 met à jour régulièrement les valeurs de Doppler et de retard ce qui lui permet de démoduler le signal reçu $S_r$ et d'en extraire l'information de navigation correspondante. Il transmet par la suite cette information au module de commande 30.

Finalement, le module de commande 30 consolide l'ensemble des informations acquises par l'ensemble des voies d'acquisition et en déduit la position du récepteur 20, sa vitesse et l'heure.

Le procédé de détection d'une fausse synchronisation va désormais être expliqué en détail en référence à la figure 5 présentant un organigramme de ses étapes.

Lors de l'étape 110 initiale, le module de détection 28 acquiert le signal local $S_{loc}$ synchronisé avec le signal S par le module d'acquisition 24 lors de la phase d'acquisition.

Les étapes 115, 120 et 130 suivantes sont mises en œuvre de manière parallèle, pendant la phase de convergence. Les étapes 135, 140, 150 et 160 sont mises en œuvre de manière consécutive à la fin de la phase de convergence.

Lors de l'étape 115, le module de détection 28 détermine une pluralité d'intervalles de corrélation.

Chaque intervalle de corrélation est identifié par la suite par l'indice k variant entre 1 et $K_{max}$, $K_{max}$ étant le nombre total d'intervalles de corrélation sur la durée de la phase de convergence.

Les intervalles de corrélation ont par exemple sensiblement la même durée T qui est égale par exemple à 20 ms.

Lors de l'étape 120, pour chaque intervalle de corrélation k, le module de détection 28 détermine un corrélateur ponctuel $Z_p(k)$.

En particulier, le corrélateur ponctuel $Z_p(k)$ correspond à la valeur de corrélation entre le signal reçu $S_r$ et le signal local $S_{loc}$ dans l'intervalle de corrélation $k$, cette valeur de corrélation est déterminée par la formule suivante :

$$Z_p(k) = \frac{1}{T} \int_{kT}^{(k+1)T} S_r(t)S_{loc}(t)dt.$$

Lors de l'étape 130, pour chaque intervalle de corrélation k, le module de détection 28 détermine $N$ corrélateurs supplémentaires $Z_s(k)$. Le nombre $N$ est par exemple supérieur ou égal à 4.

Dans l'exemple de réalisation décrit ci-après, le nombre N est égal à 4.

L'indice s permet d'identifier chaque corrélateur $Z_s(k)$. Cet indice varie entre 1 et $N$.

Chaque corrélateur supplémentaire $Z_s(k)$ correspond à la valeur de corrélation entre le signal reçu $S_r$ et un signal décalé $S_d^s$ dans l'intervalle de corrélation k.

Le signal décalé $S_d$ comprend l'onde porteuse local $exp(-j\phi_{ploc}(t))$ du signal local $S_{loc}$ et un code d'étalement $C_n(\phi_{cloc}(t) - d_s)$ décalé en retard par rapport au code d'étalement du signal local d'une valeur de décalage $d_s$.

Autrement dit, chaque corrélateur supplémentaire $Z_s(k)$ est déterminé par la formule suivante :

$$Z_s(k) = \frac{1}{T} \int_{kT}^{(k+1)T} S_r(t)S_d^s(t)dt,$$

où

$$S_d^s(t) = \exp\left(-j\phi_{ploc}(t)\right) . C_n(\phi_{cloc}(t) - d_s).$$

La valeur de décalage $d_s$ est choisi par chaque corrélateur $Z_s(k)$ en fonction du code d'étalement local $C_n(\phi_{cloc})$.

En particulier, la valeur de décalage $d_s$ est choisie de sorte que la fonction d'autocorrélation $R_{n,n}$ du code d'étalement local $C_n(\phi_{cloc})$ dans le point correspondant à cette valeur de décalage $d_s$, correspond à un pic secondaire de cette fonction d'autocorrélation.

On conçoit alors que chaque valeur de décalage $d_s$ contient un nombre entier de chips, c'est-à-dire, $d_s = M_s T_{chip}$, où $M_s$ est un nombre entier.

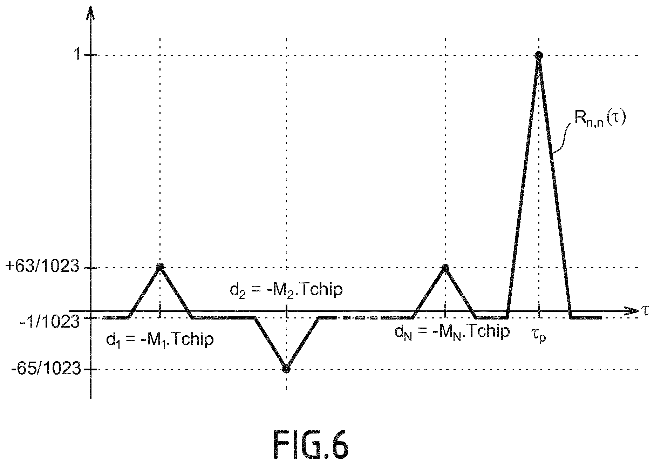

Le choix des valeurs de décalage $d_s$ pour différents corrélateurs supplémentaires $Z_s(k)$ est illustré sur la figure 6.

En effet, la figure 6 illustre la fonction d'autocorrélation $R_{n,n}$ du code d'étalement local $C_n(\phi_{cloc})$. Comme mentionné précédemment, une telle fonction d'autocorrélation $R_{n,n}$ comporte un pic principal qui correspond à la valeur de la fonction $R_{n,n}$ dans le point $\tau_p$ sur la figure 6, et une pluralité de pics secondaires correspondant à la valeur de la fonction $R_{n,n}$ dans des points décalés du point $\tau_p$ par un nombre entier de chips.

Ainsi, selon la figure 6, les valeurs de décalage $d_s$ sont choisies de sorte à correspondre aux pics secondaires de la fonction d'autocorrélation $R_{n,n}$.

Lors de l'étape 135 mise en œuvre à la fin de la phase de convergence, le module de détection 28 détermine s'il s'agit d'une fausse synchronisation à valeur de Doppler non-nulle.

Pour ce faire, le module de détection 28 détermine une valeur d'incohérence $V_{inc}$ entre la fréquence du code d'étalement local $C_n(\phi_{cloc})$ et la fréquence de la porteuse locale $exp(-j\phi_{ploc})$.

La valeur d'incohérence $V_{inc}$ est déterminée par l'expression suivante :

$$V_{inc} = \left| c \left[ \frac{F_{cloc}}{F_{cnom}} - \frac{F_{ploc}}{F_{pnom}} \right] \right|,$$

où

$F_{cloc} = (\phi_{cloc}(t + \Delta t) - \phi_{cloc}(t))/\Delta t$ est la fréquence du code d'étalement local ;

$F_{ploc} = (\phi_{ploc}(t + \Delta t) - \phi_{ploc}(t))/2\pi/\Delta t$ est la fréquence de la porteuse locale;

$F_{cnom}$ et $F_{pnom}$ sont des valeurs nominales prédéterminées respectivement de la fréquence du code d'étalement local $C_n(\phi_{cloc})$ et de la fréquence de la porteuse locale $exp(-j\phi_{ploc})$ ; et

$c$ est la vitesse de la lumière.

Dans l'exemple de réalisation décrit, correspondant au signal GPS L1 C/A, les valeurs nominales $F_{cnom}$ et $F_{pnom}$ sont choisies comme suit :

$$F_{cnom} = 1{,}023 \text{ MHz}, \quad F_{pnom} = 1575{,}42 \text{ MHz}.$$

Puis, le module de détection 28 compare la valeur d'incohérence $V_{inc}$ avec un seuil d'incohérence prédéterminé.

Lorsque la valeur d'incohérence est supérieur au seuil d'incohérence, le module de détection 28 détermine qu'il s'agit d'une fausse synchronisation à valeur de Doppler non-nulle. Dans ce cas, le module de commande 30 lance à nouveau la phase d'acquisition.

Dans le cas contraire, le module de détection 28 détermine s'il s'agit d'une fausse synchronisation à valeur de Doppler nulle, grâce aux étapes suivantes.

En particulier, lors de l'étape 140, le module de détection 28 détermine un indicateur *Ind* de fausse synchronisation en fonction des corrélateurs déterminés.

En particulier, l'indicateur *Ind* est défini comme un ratio d'un détecteur *Det* sur une puissance de référence $P_{réf}$, c'est-à-dire :

$$Ind = \frac{Det}{P_{réf}}.$$

Le détecteur *Det* est déterminé en fonction des corrélateurs ponctuels $Z_p(k)$ et des corrélateurs supplémentaires $Z_s(k)$ déterminés sur l'ensemble des intervalles de corrélation, selon l'expression suivante :

$$Det = \sum_{k=1}^{K_{max}} \text{Re} \left[ \left( P_1 Z_1(k) + P_2 Z_2(k) + \cdots + P_N Z_N(k) \right) \overline{Z_p(k)} \right],$$

où

Re[X] désigne la partie réelle d'un nombre complexe $X$;

$\overline{X}$ désigne le conjugué d'un nombre complexe $X$; et

$P_s$ sont des coefficients de pondération prédéterminés, l'indice s variant entre 1 et $N$.

La puissance de référence $P_{réf}$ est déterminée en fonction uniquement des corrélateurs ponctuels $Z_p(k)$ selon l'expression suivante :

$$P_{réf} = \sum_{k=1}^{K_{max}} \text{Re}\left[Z_p(k)\overline{Z_p(k)}\right] = \sum_{k=1}^{K_{max}} \left\|Z_p(k)\right\|^2,$$

où

$\|X\|$ désigne une norme d'un nombre complexe $X$.

Les coefficients de pondération $P_s$ correspondent aux amplitudes théoriques de la fonction d'autocorrélation $R_{n,n}$ dans des points correspondant aux valeurs de décalage $d_s$.

Ainsi, chaque coefficient de pondération $P_s$ est choisi dans l'ensemble { $\frac{63}{1023}$ ; $-\frac{65}{1023}$ }.

Lors de l'étape 150 suivante, le module de détection 28 compare l'indicateur *Ind* de fausse synchronisation avec un seuil bas $E_b$ et un seuil haut $E_H$.

En particulier, chaque seuil est déterminé préalablement en fonction du nombre N de corrélateurs utilisés par le module de détection 28.

À cet effet, la mémoire morte du récepteur 20 est apte à stocker un seuil bas $E_B$ et un seuil haut $E_H$ calculés préalablement, relativement à la valeur de $N$ choisie.

Les seuils correspondent à des valeurs théoriques de l'indicateur *Ind* dans des cas d'une fausse synchronisation.

Pour calculer ces seuils, plusieurs hypothèses sur les valeurs théoriques des corrélateurs $Z_s(k)$ et $Z_p(k)$ dans les cas d'une fausse synchronisation sont admises.

Ainsi, le seuil bas $E_B$ est calculé dans l'hypothèse que chaque corrélateur ponctuel $Z_p(k)$ correspond à un pic secondaire et que chaque corrélateur supplémentaire $Z_s(k)$ correspond à la valeur d'un tronçon constant.

Lorsque $N = 4$, le seuil bas $E_B$ est sensiblement égal à 0,0039. La valeur retenue pour le seuil bas $E_B$ est par exemple égale sensiblement à 0,01.

Le seuil haut $E_H$ est calculé dans l'hypothèse que chaque corrélateur ponctuel $Z_p(k)$ correspond à un pic secondaire, qu'au moins certains des corrélateurs supplémentaires $Z_s(k)$ correspondent à des pics secondaires et qu'au moins certains des corrélateurs supplémentaires $Z_s(k)$ correspondent à la valeur d'un tronçon constant.

Lorsque $N = 4$, le seuil haut $E_H$ est sensiblement égal à 0,0625. La valeur retenue pour le seuil haut $E_H$ est par exemple égale sensiblement à 0,03.

Lors de l'étape 160 finale, le module de détection 28 détecte une fausse synchronisation en fonction du résultat de la comparaison de l'indicateur de fausse synchronisation *Ind* avec les seuils.

Ainsi, par exemple, le module de détection 28 détecte une fausse synchronisation lorsque l'indicateur de fausse synchronisation *Ind* est inférieur au seuil bas $E_B$ ou supérieur au seuil haut $E_H$. Dans ce cas, le module de commande 30 lance à nouveau la phase d'acquisition.

Dans le cas contraire, le module de détection 28 détermine qu'il ne s'agit pas d'une fausse synchronisation et le module de commande 30 lance la phase de poursuite.

On conçoit alors que la présente invention présente un certain nombre d'avantages.

Ainsi, le procédé selon l'invention permet de détecter une fausse synchronisation très rapidement, juste après la phase d'acquisition.

Ceci permet alors d'éviter la nécessité d'acquisition des éphémérides contenues dans l'information de navigation et de diminuer ainsi le temps de détection d'une fausse synchronisation.

L'utilisation du procédé est particulièrement avantageuse lors des masquages des satellites car le procédé permet d'assurer la continuité de service.

Bien entendu, nombreux autres exemples de réalisation de l'invention sont également possibles.

## Revendications

**1.** Procédé (100) de détection d'une fausse synchronisation d'un récepteur (20) avec un satellite *(Sat_n)* lors d'une phase d'acquisition d'un signal de navigation issu de ce satellite *(Sat_n)*, le satellite *(Sat_n)* faisant partie d'un système

**EP 3 168 648 B1**

(10) global de positionnement par satellites, le signal comprenant une information de navigation modulée par un code d'étalement ($C_n(\phi_c)$) propre à ce satellite et portée par une onde porteuse ($exp(-j\phi_p)$);

lors de la phase d'acquisition, le récepteur (20) étant apte à recevoir le signal de navigation émis par le satellite *(Sat$_n$)*, à générer un signal local ($S_{loc}$) comprenant une onde porteuse locale ($exp(-j\phi_{ploc})$) et un code d'étalement local ($C_n(\phi_{cloc})$), et à synchroniser le signal local ($S_{loc}$) avec le signal reçu *(S$_r$)* du satellite *(Sat$_n$)* pour démoduler le signal reçu *(S$_r$)* et en extraire l'information de navigation lors d'une phase de poursuite suivant la phase d'acquisition ;

le procédé (100) étant mis en œuvre après la phase d'acquisition pendant une phase de convergence et comprenant les étapes suivantes :

- dans au moins un intervalle de corrélation (k), déterminer (120) un corrélateur ponctuel *(Z$_p$(k))* correspondant à la valeur de corrélation entre le signal reçu *(S$_r$)* et le signal local *(S$_{loc}$)* ;
- dans le ou chaque intervalle de corrélation (k), déterminer (130) N corrélateurs supplémentaires ($Z_s$(k)) correspondant aux valeurs de corrélation entre le signal reçu *(S$_r$)* et un signal décalé ( $S_d^s$ ), chaque signal décalé ( $S_d^s$ ) comprenant l'onde porteuse locale ($exp(-j\phi_{ploc})$) et un code d'étalement décalé par rapport au code d'étalement local ($C_n(\phi_{cloc})$) d'une valeur de décalage (d$_s$) égal à un nombre entier d'unités de référence, le nombre N étant un nombre naturel ;
- déterminer (135) une valeur d'incohérence ($V_{inc}$) entre la fréquence de l'onde porteuse locale ($F_{ploc}$) et la fréquence du code d'étalement local ($F_{cloc}$), et si la valeur d'incohérence ($V_{inc}$) est supérieure à un seuil d'incohérence prédéterminé, détecter une fausse synchronisation, dans le cas contraire :

+ déterminer (140) un indicateur de fausse synchronisation *(Ind)* en fonction des corrélateurs déterminées *(Z$_p$(k),Z$_s$(k))* ;
+ comparer (150) l'indicateur de fausse synchronisation *(Ind)* avec au moins un seuil *(E$_B$,E$_H$)* ;
+ détecter (160) une fausse synchronisation en fonction du résultat de la comparaison de l'indicateur de fausse synchronisation *(Ind)* avec l'au moins un seuil *(E$_B$,E$_H$)* ;

chaque valeur de décalage (d$_s$) étant choisie en fonction du code d'étalement local ($C_n(\phi_{cloc})$) de sorte que la fonction d'autocorrélation ($R_{n,n}$) du code d'étalement local ($C_n(\phi_{cloc})$) dans le point correspondant à cette valeur de décalage (d$_s$), correspond à un pic secondaire de cette fonction d'autocorrélation;

la valeur d'incohérence ($V_{inc}$) étant déterminée par l'expression suivante :

$$\left| c \left[ \frac{F_{cloc}}{F_{cnom}} - \frac{F_{ploc}}{F_{pnom}} \right] \right|,$$

où

$F_{cloc}$ est la fréquence du code d'étalement local ;
$F_{ploc}$ est la fréquence de l'onde porteuse locale;
$P_{cnom}$ et $F_{pnom}$ sont des valeurs nominales prédéterminées respectivement de la fréquence du code d'étalement local et de la fréquence de l'onde porteuse locale ; et
c est la vitesse de la lumière.

2. Procédé (100) selon la revendication 1, dans lequel l'unité de référence est un chip.

3. Procédé (100) selon l'une quelconque des revendications précédentes, dans lequel l'indicateur de fausse synchronisation *(Ind)* est le ratio d'un détecteur *(Det)* déterminé en fonction du ou de chaque corrélateur ponctuel ($Z_p(k)$) et des corrélateurs supplémentaires ($Z_s$(k)), sur une puissance de référence ($P_{réf}$) déterminée en fonction uniquement du ou de chaque corrélateur ponctuel *(Z$_p$(k))*.

4. Procédé (100) selon la revendication 3, dans lequel la détermination du détecteur *(Det)* comprend le calcul d'une somme pondérée des corrélateurs supplémentaires ($Z_s$(k)) avec des coefficients de pondération (P$_s$) prédéterminés.

5. Procédé (100) selon la revendication 4, dans lequel les coefficients de pondération (P$_s$) correspondent à des am-

plitudes de la fonction d'autocorrélation ($R_{n,n}$) normalisée du code d'étalement local ($C_n(\phi_{cloc})$), dans des points correspondant aux valeurs de décalage ($d_s$), la fonction d'autocorrélation ($R_{n,n}$) normalisée valant 1 en un point de référence.

6. Procédé (100) selon l'une quelconque des revendications précédentes, dans lequel le code d'étalement local ($C_n(\phi_{cloc})$) est un code de Gold.

7. Procédé (100) selon la revendication 6, dans lequel :

- lors de l'étape de comparaison (150), l'indicateur de fausse synchronisation *(Ind)* est comparé avec un seuil bas *($E_B$)* et avec un seuil haut *($E_H$)* ;
- lors de l'étape de détection (160), une fausse synchronisation est détectée lorsque l'indicateur de fausse synchronisation *(Ind)* est inférieur au seuil bas *($E_B$)* ou supérieur au seuil haut ($E_H$).

8. Procédé (100) selon la revendication 7, dans lequel, lorsque le nombre $N$ est égal à quatre, le seuil bas *($E_B$)* est sensiblement égal à 0,01 et le seuil haut *($E_H$)* est sensiblement égal à 0,03.

9. Procédé (100) selon l'une quelconque des revendications précédentes, dans lequel la synchronisation du signal local *($S_{loc}$)* avec le signal reçu *($S_r$)* comprend la détermination d'une valeur de retard du code d'étalement ($C_n(\phi_c)$) du signal reçu *($R_r$)* par rapport à celui du signal local *($S_{loc}$)* et d'une valeur de décalage en fréquence de l'onde porteuse *($exp(-j\phi_p)$)* du signal reçu *($S_r$)* par rapport à celle du signal local *($S_{loc}$)*.

10. Produit programme d'ordinateur comportant des instructions logicielles qui, lorsque mises en œuvre par un équipement informatique, mettent en œuvre le procédé (100) selon l'une quelconque des revendications précédentes.

11. Module de détection (28) d'une fausse synchronisation d'un récepteur (20) avec un satellite *($Sat_n$)* lors d'une phase d'acquisition d'un signal de navigation issu de ce satellite *($Sat_n$)*, le satellite *($Sat_n$)* faisant partie d'un système (10) global de positionnement par satellites, le signal comprenant une information de navigation modulée par un code d'étalement ($C_n(\phi_c)$) propre à ce satellite et portée par une onde porteuse *($exp(-j\phi_p)$)*;

lors de la phase d'acquisition, le récepteur (20) étant apte à recevoir le signal de navigation émis par le satellite *($Sat_n$),* à générer un signal local *($S_{loc}$)* comprenant une onde porteuse locale *($exp(-j\phi_{cloc})$)* et un code d'étalement local ($C_n(\phi_{cloc})$), et à synchroniser le signal local *($S_{loc}$)* avec le signal reçu *($S_r$)* du satellite *($Sat_n$)* pour démoduler le signal reçu *($S_r$)* et en extraire l'information de navigation lors d'une phase de poursuite suivant la phase d'acquisition ;
le module de détection (28) étant apte à :

- dans au moins un intervalle de corrélation (k), déterminer un corrélateur ponctuel *($Z_p(k)$)* correspondant à la valeur de corrélation entre le signal reçu *($S_r$)* et le signal local *($S_{loc}$)* ;
- dans le ou chaque intervalle de corrélation (k), déterminer $N$ corrélateurs supplémentaires ($Z_s(k)$) correspondant aux valeurs de corrélation entre le signal reçu ($S_r$) et un signal décalé ($S_d^s$), chaque signal décalé ($S_d^s$) comprenant l'onde porteuse locale *($exp(-j\phi_{ploc})$)* et un code d'étalement décalé par rapport au code d'étalement local ($C_n(\phi_{cloc})$) d'une valeur de décalage ($d_s$) égal à un nombre entier d'unités de référence, le nombre $N$ étant un nombre naturel ;
- déterminer une valeur d'incohérence ($V_{inc}$) entre la fréquence de l'onde porteuse locale ($F_{ploc}$) et la fréquence du code d'étalement local ($F_{cloc}$), et si la valeur d'incohérence ($V_{inc}$) est supérieure à un seuil d'incohérence prédéterminé, détecter une fausse synchronisation, dans le cas contraire :

+ déterminer un indicateur de fausse synchronisation *(Ind)* en fonction des corrélateurs déterminées *($Z_p(k),Z_s(k)$)* ;
+ comparer l'indicateur de fausse synchronisation *(Ind)* avec au moins un seuil *($E_B,E_H$)* ;
+ détecter une fausse synchronisation en fonction du résultat de la comparaison de l'indicateur de fausse synchronisation *(Ind)* avec l'au moins un seuil *($E_B,E_H$)* ;

chaque valeur de décalage ($d_s$) étant choisie en fonction du code d'étalement local ($C_n(\phi_{cloc})$) de sorte que la fonction d'autocorrélation ($R_{n,n}$) du code d'étalement local ($C_n(\phi_{cloc})$) dans le point correspondant à cette valeur

de décalage ($d_s$), correspond à un pic secondaire de cette fonction d'autocorrélation;
la valeur d'incohérence ($V_{inc}$) étant déterminée par l'expression suivante :

$$\left| c \left[ \frac{F_{cloc}}{F_{cnom}} - \frac{F_{ploc}}{F_{pnom}} \right] \right|,$$

où

$F_{cloc}$ est la fréquence du code d'étalement local ;
$F_{ploc}$ est la fréquence de l'onde porteuse locale;
$F_{cnom}$ et $F_{pnom}$ sont des valeurs nominales prédéterminées respectivement de la fréquence du code d'étalement local et de la fréquence de l'onde porteuse locale ; et
c est la vitesse de la lumière.

## Patentansprüche

1. Verfahren (100) zum Erkennen einer falschen Synchronisation eines Empfängers (20) mit einem Satelliten $(Sat_n)$ während einer Erfassungsphase eines Navigationssignals, das von diesem Satelliten $(Sat_n)$ stammt, wobei der Satellit $(Sat_n)$ Teil eines globalen Satellitenpositionierungssystems (10) ist, das Signal umfassend Navigationsinformationen, die durch einen Spreizcode ($C_n(\phi_c)$) moduliert werden, der diesem Satelliten eigen ist und von einer Trägerwelle ($exp(-j\Phi_p)$) getragen wird;

während der Erfassungsphase, wobei der Empfänger (20) in der Lage ist, das von dem Satelliten $(Sat_n)$ gesendete Navigationssignal zu empfangen, Erzeugen eines lokalen Signals ($S_{loc}$), umfassend eine lokale Trägerwelle ($exp(-j\phi_{ploc})$) und einen lokalen Spreizcode ($C_n(\phi_{cloc})$), und Synchronisieren des lokalen Signals ($S_{loc}$) mit dem empfangenen Signal ($S_r$) des Satelliten $(Sat_n)$, um das empfangene Signal ($S_r$) zu demodulieren und daraus die Navigationsinformationen während einer auf die Erfassungsphase folgenden Verfolgungsphase zu extrahieren;
wobei das Verfahren (100) nach der Erfassungsphase während einer Konvergenzphase durchgeführt wird und umfassend die folgenden Schritte:

- in mindestens einem Korrelationsintervall (k), Bestimmen (120) eines Punktkorrelators ($Z_p(k)$), der dem Korrelationswert zwischen dem empfangenen Signal ($S_r$) und dem lokalen Signal ($S_{loc}$) entspricht;
- in dem oder jedem Korrelationsintervall (k), Bestimmen (130) von N zusätzlichen Korrelatoren ($Z_s(k)$), die den Korrelationswerten zwischen dem empfangenen Signal ($S_r$) und einem verschobenen Signal ($S^s_d$) entsprechen, jedes verschobene Signal ($S^s_d$) umfassend die lokale Trägerwelle ($exp(-j\phi_{ploc})$) und einen Spreizcode, der gegenüber dem lokalen Spreizcode ($C_n(\phi_{cloc})$) um einen Verschiebungswert ($d_s$) gleich einer ganzen Zahl von Bezugseinheiten verschoben ist, wobei die Zahl N eine natürliche Zahl ist;
- Bestimmen (135) eines Inkohärenzwerts ($V_{inc}$) zwischen der Frequenz der lokalen Trägerwelle ($F_{ploc}$) und der Frequenz des lokalen Spreizcodes ($F_{cloc}$), und wenn der Inkohärenzwert ($V_{inc}$) größer ist als ein vorbestimmter Inkohärenzschwellenwert, Erfassen einer falschen Synchronisation, im entgegengesetzten Fall:

    + Bestimmen (140) eines Indikators für falsche Synchronisation ($Ind$) basierend auf den bestimmten Korrelatoren ($Z_p(k),Z_s(k)$);
    + Vergleichen (150) des Indikators für falsche Synchronisation ($Ind$) mit mindestens einem Schwellenwert $(E_B,E_H)$;
    + Erfassen (160) einer falschen Synchronisation basierend auf dem Ergebnis des Vergleichs des Indikators für falsche Synchronisation ($Ind$) mit dem mindestens einen Schwellenwert ($E_B,E_H$);

wobei jeder Verschiebungswert ($d_s$) abhängig von dem lokalen Spreizcode ($C_n(\phi_{cloc})$) gewählt wird, sodass die Autokorrelationsfunktion ($R_{n,n}$) des lokalen Spreizcodes ($C_n(\phi_{cloc})$) an dem Punkt, der diesem Verschiebungswert ($d_s$) entspricht, einem sekundären Peak dieser Autokorrelationsfunktion entspricht;
wobei der Inkonsistenzwert ($V_{inc}$) durch den folgenden Ausdruck bestimmt wird:

$$\left| c \left[ \frac{F_{cloc}}{F_{cnom}} - \frac{F_{ploc}}{F_{pnom}} \right] \right|,$$

wobei

$F_{cloc}$ die Frequenz des lokalen Spreizcodes ist;

$F_{ploc}$ die Frequenz der lokalen Trägerwelle ist;

$F_{cnom}$ und $F_{pnom}$ vorbestimmte Nennwerte der Frequenz des lokalen Spreizcodes bzw. der Frequenz der lokalen Trägerwelle sind; und

$c$ die Lichtgeschwindigkeit ist.

2. Verfahren (100) nach Anspruch 1, wobei die Referenzeinheit ein Chip ist.

3. Verfahren (100) nach einem der vorherigen Ansprüche, wobei der Indikator für falsche Synchronisation (*Ind*) das Verhältnis eines Detektors (Det), der abhängig von dem oder jedem Punktkorrelator ($Z_p(k)$) und den zusätzlichen Korrelatoren ($Z_s(k)$) bestimmt wird, zu einer Referenzleistung ($P_{ref}$) ist, die nur abhängig von dem oder jedem Punktkorrelator ($Z_p(k)$) bestimmt wird.

4. Verfahren (100) nach Anspruch 3, wobei das Bestimmen des Detektors (*Det*) das Berechnen einer gewichteten Summe von zusätzlichen Korrelatoren ($Z_s(k)$) mit vorbestimmten Gewichtungskoeffizienten ($P_s$) umfasst.

5. Verfahren (100) nach Anspruch 4, wobei die Gewichtungskoeffizienten ($P_s$) den Amplituden der normalisierten Autokorrelationsfunktion ($R_{n,n}$) des lokalen Spreizcodes ($C_n(\phi_{cloc})$) an Punkten entsprechen, die den Verschiebungswerten ($d_s$) entsprechen, wobei die normalisierte Autokorrelationsfunktion ($R_{n,n}$) an einem Referenzpunkt 1 ist.

6. Verfahren (100) nach einem der vorherigen Ansprüche, wobei der lokale Spreizungscode ($C_n(\phi_{cloc})$) ein Gold-Code ist.

7. Verfahren (100) nach Anspruch 6, wobei:

- in dem Vergleichsschritt (150) der Indikator für falsche Synchronisation (*Ind*) mit einem niedrigen Schwellenwert ($E_B$) und mit einem hohen Schwellenwert ($E_H$) verglichen wird;
- in dem Erfassungsschritt (160) eine falsche Synchronisation erfasst wird, wenn der Indikator für falsche Synchronisation (*Ind*) kleiner als der untere Schwellenwert ($E_B$) oder größer als der obere Schwellenwert ($E_H$) ist.

8. Verfahren (100) nach Anspruch 7, wobei, wenn die Zahl *N* gleich vier ist, der untere Schwellenwert *($E_B$)* im Wesentlichen gleich 0,01 und der obere Schwellenwert *($E_H$)* im Wesentlichen gleich 0,03 ist.

9. Verfahren (100) nach einem der vorherigen Ansprüche, wobei die Synchronisation des lokalen Signals ($S_{loc}$) mit dem empfangenen Signal ($S_r$) das Bestimmen eines Verzögerungswerts des Spreizcodes ($C_n(\phi_c)$) des empfangen Signals ($R_r$) in Bezug auf das lokale Signal ($S_{loc}$) und eines Frequenzverschiebungswerts der Trägerwelle ($exp(-j\phi_p)$) des empfangenen Signals ($S_r$) in Bezug auf das lokale Signal ($S_{loc}$) umfasst.

10. Computerprogrammprodukt, umfassend Softwareanweisungen, die, wenn sie von einer Rechenvorrichtung implementiert werden, das Verfahren (100) nach einem der vorherigen Ansprüche implementieren.

11. Erfassungsmodul (28) zum Erkennen einer falschen Synchronisation eines Empfängers (20) mit einem Satelliten *($Sat_n$)* während einer Erfassungsphase eines Navigationssignals, das von diesem Satelliten *($Sat_n$)* stammt, wobei der Satellit *($Sat_n$)* Teil eines globalen Satellitenpositionierungssystems (10) ist, das Signal umfassend Navigationsinformationen, die durch einen Spreizcode ($C_n(\phi_c)$) moduliert werden, der diesem Satelliten eigen ist und von einer Trägerwelle ($exp(-j\phi_p)$) getragen wird;

während der Erfassungsphase, wobei der Empfänger (20) in der Lage ist, das von dem Satelliten *($Sat_n$)* gesendete Navigationssignal zu empfangen, Erzeugen eines lokalen Signals ($S_{loc}$), umfassend eine lokale Trägerwelle ($exp(-j\phi_{ploc})$) und einen lokalen Spreizcode ($C_n(\phi_{cloc})$), und Synchronisieren des lokalen Signals ($S_{loc}$) mit dem empfangenen Signal ($S_r$) des Satelliten *($Sat_n$),* um das empfangene Signal ($S_r$) zu demodulieren und

daraus die Navigationsinformationen während einer auf die Erfassungsphase folgenden Verfolgungsphase zu extrahieren;

wobei das Erfassungsmodul (28) zu Folgendem geeignet ist:

- in mindestens einem Korrelationsintervall (k), Bestimmen eines Punktkorrelators ($Z_p(k)$), der dem Korrelationswert zwischen dem empfangenen Signal ($S_r$) und dem lokalen Signal ($S_{loc}$) entspricht;
- in dem oder jedem Korrelationsintervall (k), Bestimmen von N zusätzlichen Korrelatoren ($Z_s(k)$), die den Korrelationswerten zwischen dem empfangenen Signal ($S_r$) und einem verschobenen Signal ($S_d^s$) entsprechen, jedes verschobene Signal ($S_d^s$) umfassend die lokale Trägerwelle $exp(-j\phi_{ploc})$) und einen Spreizcode, der gegenüber dem lokalen Spreizcode ($C_n(\phi_{cloc})$) um einen Verschiebungswert ($d_s$) gleich einer ganzen Zahl von Bezugseinheiten verschoben ist, wobei die Zahl *N* eine natürliche Zahl ist;
- Bestimmen eines Inkohärenzwerts ($V_{inc}$) zwischen der Frequenz der lokalen Trägerwelle ($F_{ploc}$) und der Frequenz des lokalen Spreizcodes ($F_{cloc}$), und wenn der Inkohärenzwert ($V_{inc}$) größer ist als ein vorbestimmter Inkohärenzschwellenwert, Erfassen einer falschen Synchronisation, im entgegengesetzten Fall:

+ Bestimmen eines Indikators für falsche Synchronisation (*Ind*) basierend auf den bestimmten Korrelatoren ($Z_p(k),Z_s(k)$);
+ Vergleichen des Indikators für falsche Synchronisation (*Ind*) mit mindestens einem Schwellenwert ($E_B,E_H$);
+ Erfassen einer falschen Synchronisation basierend auf dem Ergebnis des Vergleichs des Indikators für falsche Synchronisation (*Ind*) mit dem mindestens einen Schwellenwert ($E_B,E_H$);

wobei jeder Verschiebungswert ($d_s$) abhängig von dem lokalen Spreizcode ($C_n(\phi_{cloc})$) gewählt wird, sodass die Autokorrelationsfunktion (*Rn,n*) des lokalen Spreizcodes ($C_n(\phi_{cloc})$) an dem Punkt, der diesem Verschiebungswert ($d_s$) entspricht, einem sekundären Peak dieser Autokorrelationsfunktion entspricht;

wobei der Inkonsistenzwert ($V_{inc}$) durch den folgenden Ausdruck bestimmt wird:

$$\left| c \left[ \frac{F_{cloc}}{F_{cnom}} - \frac{F_{ploc}}{F_{pnom}} \right] \right|,$$

wobei

$F_{cloc}$ die Frequenz des lokalen Spreizcodes ist;
$F_{ploc}$ die Frequenz der lokalen Trägerwelle ist;
$F_{cnom}$ und $F_{pnom}$ vorbestimmte Nennwerte der Frequenz des lokalen Spreizcodes bzw. der Frequenz der lokalen Trägerwelle sind; und
*c* die Lichtgeschwindigkeit ist.

## Claims

1. A method (100) for detecting false synchronisation of a receiver (20) with a satellite *(Sat_n)* during a phase of acquisition of a navigation signal from this satellite *(Sat_n)*, the satellite *(Sat_n)* being part of a global satellite positioning system (10), the signal comprising navigation information modulated by a spreading code ($C_n(\phi_c)$) specific to this satellite and carried by a carrier wave ($exp(-j\phi_p)$);

during the acquisition phase, the receiver (20) being able to receive the navigation signal transmitted by the satellite *(Sat_n)*, to generate a local signal ($S_{loc}$) comprising a local carrier wave ($exp(-j\phi_{ploc})$) and a local spreading code ($C_n(\phi_{cloc})$), and synchronising the local signal ($S_{loc}$) with the received signal ($S_r$) from the satellite *(Sat_n)* to demodulate the received signal ($S_r$) and extract navigation information from it during a tracking phase following the acquisition phase;

the method (100) being carried out after the acquisition phase during a convergence phase and comprising the following steps:

- in at least one correlation interval (k), determining (120) a point correlator ($Z_p(k)$) corresponding to the correlation value between the received signal ($S_r$) and the local signal ($S_{loc}$);

- in the or each correlation interval (k), determining (130) N additional correlators ($Z_s$(k)) corresponding to the correlation values between the received signal ($S_r$) and an offset signal ($S^s_d$), each offset signal ($S^s_d$) comprising the local carrier wave ($\exp(-j\phi_{ploc})$) and a spreading code shifted with respect to the local spreading code ($C_n(\phi_{cloc})$) by an offset value ($d_s$) equal to an integer number of reference units, the number N being a natural number;
- determining (135) an inconsistency value ($V_{inc}$) between the frequency of the local carrier wave ($F_{ploc}$) and the frequency of the local spreading code ($F_{cloc}$), and if the inconsistency value ($V_{inc}$) is greater than a predetermined inconsistency threshold, detecting a false synchronization, otherwise:

> + determining (140) a false synchronization indicator *(Ind)* based on the determined correlators ($Z_p$(k),$Z_s$(k));
> + comparing (150) the false synchronization indicator *(Ind)* with at least one threshold ($E_B$,$E_H$);
> + detecting (160) a false synchronization according to the result of the comparison of the false synchronization indicator *(Ind)* with the at least one threshold ($E_B$,$E_H$);

each offset value ($d_s$) being chosen as a function of the local spreading codel ($C_n(\phi_{cloc})$) so that the autocorrelation function ($R_{n,n}$) of the local spreading code ($C_n(\phi_{cloc})$) in the point corresponding to this offset value ($d_s$), corresponds to a secondary peak of this autocorrelation function;
the inconsistency value ($V_{inc}$) being determined by the following expression:

$$\left| c \left[ \frac{F_{cloc}}{F_{cnom}} - \frac{F_{ploc}}{F_{pnom}} \right] \right|,$$

where

> $F_{cloc}$ is the frequency of the local spreading code;
> $F_{ploc}$ is the frequency of the local carrier wave;
> $F_{cnom}$ and $F_{pnom}$ are predetermined nominal values of the local spreading code frequency and the local carrier frequency respectively; and
> c is the speed of light.

2. The method (100) according to claim 1, wherein the reference unit is a chip.

3. The method (100) according to any one of the preceding claims, wherein the false synchronization indicator *(Ind)* is the ratio of a detector *(Det)* determined as a function of the or each point correlator ($Z_p$(k)) and additional correlators ($Z_s$(k)), to a reference power ($P_{réf}$) determined as a function of the or each point correlator ($Z_p$(k)) only.

4. The method (100) according to claim 3, wherein the determination of the detector *(Det)* comprises calculating a weighted sum of additional correlators ($Z_s$(k)) with predetermined weighting coefficients ($P_s$).

5. The method (100) according to claim 4, wherein the weighting coefficients ($P_s$) correspond to amplitudes of the normalized autocorrelation function ($R_{n,n}$) of the local spreading code ($C_n(\phi_{cloc})$), in points corresponding to the offset values ($d_s$), the normalized autocorrelation function ($R_{n,n}$) being 1 at a reference point.

6. The method (100) according to any of the preceding claims, wherein the local spreading code ($C_n(\phi_{cloc})$) is a Gold code.

7. The method (100) according to claim 6, wherein:

> - in the comparison step (150), the false synchronization indicator *(Ind)* is compared with a low threshold ($E_B$) and with a high threshold ($E_H$);
> - in the detection step (160), a false synchronization is detected when the false synchronization indicator *(Ind)* is below the low threshold ($E_B$) or above the high threshold *($E_H$)*.

8. The method (100) according to claim 7, wherein, when the number *N* is equal to four, the low threshold ($E_B$) is substantially equal to 0.01 and the high threshold ($E_H$) is substantially equal to 0.03.

9. The method (100) according to any one of the preceding claims, wherein synchronising the local signal ($S_{loc}$) with the received signal ($S_r$) comprises determining a spreading code delay value ($C_n(\phi_c)$) of the received signal ($R_r$) with respect to that of the local signal ($S_{loc}$) and a carrier wave offset value ($exp(-j\phi_p)$) of the received signal ($S_r$) with respect to that of the local signal ($S_{loc}$).

10. A computer program product comprising software instructions, which, when carried out by a computing device, implement the method (100) according to any one of the preceding claims.

11. A method (100) for detecting false synchronisation of a receiver (20) with a satellite ($Sat_n$) during a phase of acquisition of a navigation signal from this satellite ($Sat_n$), the satellite ($Sat_n$) being part of a global satellite positioning system (10), the signal comprising navigation information modulated by a spreading code ($C_n(\phi_c)$) specific to this satellite and carried by a carrier wave ($exp(-j\phi_p)$);

during the acquisition phase, the receiver (20) being able to receive the navigation signal transmitted by the satellite (Satn), to generate a local signal ($S_{loc}$) comprising a local carrier wave ($exp(-j\phi_{ploc})$) and a local spreading code ($C_n(\phi_{cloc})$), and synchronising the local signal ($S_{loc}$) with the received signal ($S_r$) from the satellite ($Sat_n$) to demodulate the received signal ($S_r$) and extract navigation information from it during a tracking phase following the acquisition phase;
the detection module (28) being able to:

- in at least one correlation interval (k), determine a point correlator ($Z_p(k)$) corresponding to the correlation value between the received signal ($S_r$) and the local signal ($S_{loc}$);
- in the or each correlation interval (k), determine N additional correlators ($Z_s(k)$) corresponding to the correlation values between the received signal ($S_r$) and an offset signal ($S_d{}^s$), each offset signal ($S_d{}^s$) comprising the local carrier wave ($exp(-j\phi_{ploc})$) and a spreading code shifted with respect to the local spreading code ($C_n(\phi_{cloc})$) by an offset value ($d_s$) equal to an integer number of reference units, the number N being a natural number;
- determine an inconsistency value ($V_{inc}$) between the frequency of the local carrier wave ($F_{ploc}$) and the frequency of the local spreading code ($F_{cloc}$), and if the inconsistency value ($V_{inc}$) is greater than a predetermined inconsistency threshold, detecting a false synchronization, otherwise:

+ determine a false synchronization indicator ($Ind$) based on the determined correlators ($Z_p(k),Z_s(k)$);
+ compare the false synchronization indicator ($Ind$) with at least one threshold ($E_B,E_H$);
+ detect a false synchronization according to the result of the comparison of the false synchronization indicator ($Ind$) with the at least one threshold ($E_B,E_H$);

each offset value ($d_s$) being chosen as a function of the local spreading code ($C_n(\phi_{cloc})$) so that the autocorrelation function ($Rn,n$) of the local spreading code ($C_n(\phi_{cloc})$) in the point corresponding to this offset value ($d_s$), corresponds to a secondary peak of this autocorrelation function;
the inconsistency value ($V_{inc}$) being determined by the following expression:

$$\left| c \left[ \frac{F_{cloc}}{F_{cnom}} - \frac{F_{ploc}}{F_{pnom}} \right] \right|,$$

where

$F_{cloc}$ is the frequency of the local spreading code;
$F_{ploc}$ is the frequency of the local carrier wave;
$F_{cnom}$ and $F_{pnom}$ are predetermined nominal values of the local spreading code frequency and the local carrier frequency respectively; and
c is the speed of light.

FIG.1

FIG.2

FIG.3

20

-22-

-24-                -26-

-30-

-28-

FIG.4

100

-110-

-115-        -120-        -130-

-135-

-140-

-150-                FIG.5

-160-

FIG.6

**EP 3 168 648 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 2011103432 A1
- EP 2520949 A1